## Europäisches Patentamt
## European Patent Office
## Office européen des brevets

(11) Publication number: **0 042 363**
**B1**

(12) **EUROPEAN PATENT SPECIFICATION**

(45) Date of publication of patent specification: **23.01.85**

(51) Int. Cl.⁴: **B 60 C 25/06**

(21) Application number: **81830082.4**

(22) Date of filing: **22.05.81**

(54) A machine for the removal and fitting of pneumatic tyres.

(30) Priority: **12.06.80 IT 4004880**
**27.03.81 IT 2896981 U**

(43) Date of publication of application:
**23.12.81 Bulletin 81/51**

(45) Publication of the grant of the patent:
**23.01.85 Bulletin 85/04**

(84) Designated Contracting States:
**AT BE DE FR NL SE**

(56) References cited:
**US-A-2 832 400**
**US-A-3 029 862**
**US-A-3 164 199**

(73) Proprietor: **G.S. S.r.L.**
**Via Provinciale per Carpi, 33**
**Correggio (Reggio Emilia) (IT)**

(72) Inventor: **Spaggiari, Rino**
**Via Zaccarelli, 1**
**Correggio (Reggio Emilia (IT)**

(74) Representative: **Bonfreschi, Mario**
**Bugnion S.p.A. Viale Trento Trieste, 25**
**I-41100 Modena (IT)**

Courier Press, Leamington Spa, England.

## Description

The invention herein described is a machine for the removal and fitting of pneumatic tyres. It is particularly suited for the removal and fitting of tyres having somewhat large dimensions, such as those used for the equipping of heavy duty vehicles, for example lorries, agricultural machinery and earth moving machines etc. There are various kinds of apparatus for removing and fitting tyres from/to large diameter wheels, which comprise a self-centring platform revolving around a horizontal axis and borne on the extremity of a strong support arm which in turn pivots on a horizontal axis parallel to that of the self-centring platform. The ability of the said arm to rotate around the pivot to which it is hinged enables positioning of the self-centring platform's axis at a varying height in order to centre it correspondingly with the individual wheel before it. The arm is normally caused to rotate by means of a jack.

A tool-bearing arm hinged at its lower end and having the ability to slide back and forth along a fixed axis parallel with the axis of the said self-centring platform's rotary movement is also provided to carry a tyre tool for the removal and fitting of pneumatic tyres. These features are disclosed by the U.S. Patent 3 164 199.

The self-centring platforms which form part of such embodiments are invariably complicated both in design and in structure. The object of the invention herein described is that of giving place to a tyre-removing and fitting machine — particularly adapted to large-diameter wheels — which is extremely simple in construction, and which can be manoeuvred easily and conveniently.

This object is obtained by the invention as defined in claim 1.

Preferred embodiments of the invention are illustrated in the accompanying drawings, in which:—

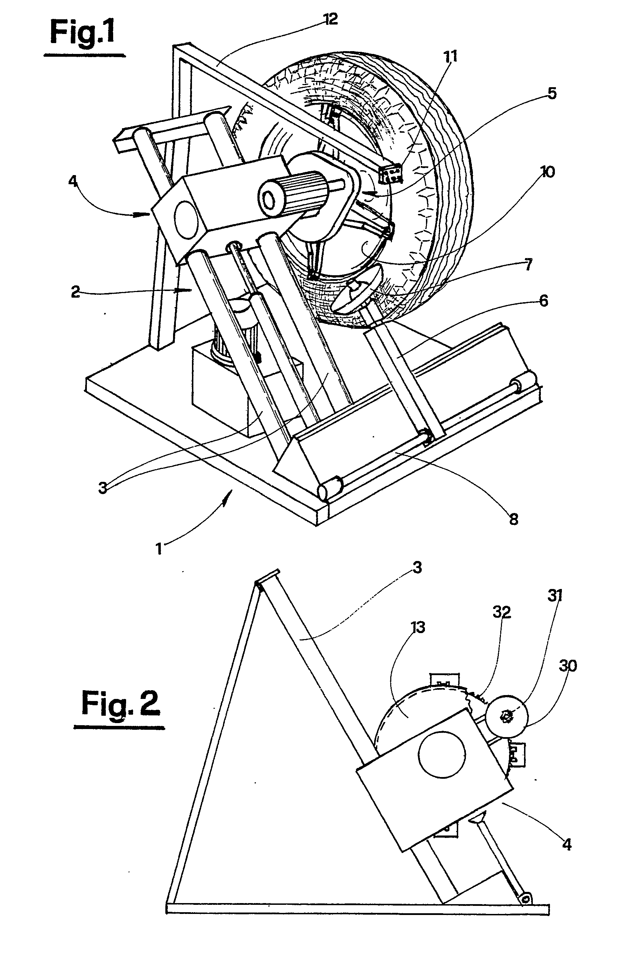

Fig. 1 shows a machine, in perspective, of the type herein described;

Fig. 2 shows a vertical elevation of a lateral view of Fig. 1;

Fig. 3 shows the axial cross-section of a first form of embodiment of the invention's self-centring platform in two different operating positions;

Fig. 4 shows the axial cross-section of a second form of embodiment of the invention's self-centring platform in two different operating positions;

Fig. 5 shows a further form of embodiment of the invention, in perspective;

Fig. 6 shows, in large scale, a vertical elevation of the lateral view of an appliance used with the embodiments illustrated in Fig. 5, mounted upon which is a first kind of tool, in working position;

Fig. 7 shows the same view as in Fig. 6, but in a different working position;

Fig. 8 shows a lateral view of Fig. 6, from the right hand side;

Fig. 9 shows the vertical elevation of a lateral view of the appliance illustrated in Figs. 5, 6, 7 and 8, mounted upon which is a second kind of tool;

Figs. 9a and 9b show cross-sections according to I—I and II—II in Fig. 9;

Fig. 10 shows a lateral view of Fig. 9, from the left hand side;

Fig. 11 shows a plan of Fig. 9, from above.

With reference to the said drawings, (1) indicates a permanent chassis bearing upon it a robust vertical structure (2) on which, inclined with respect to the vertical, the cylindrical rectilinear guides (3) are located. A movable chassis (4) runs along these guides (3) which supports a self-centring platform (5) that revolves around a horizontal axis and serves to receive and lock the wheel rims, centring them with respect to the said horizontal axis. A tool-bearing arm (6) is disposed with its actual axis in a plane parallel to that defined by the guides (3) and containing the self-centring platform's (5) axis. The tool-bearing arm (6) is hinged at its lower end around a pivot (8) which is disposed parallel with the self-centring platform's (5) axis of rotation, the said arm sliding the length of the said pivot. A jack provides for the tool-bearing arm's (6) traverse along the pivot (8). The positioning of the tool (7), provision for which is made at the tool-bearing arm's (6) extremity, with respect to the rim (10) of the wheel (9) is quite easy, it is in fact sufficient to effect the traverse of the chassis (4) along the guides (3) until the correct position is arrived at, i.e. that of the work-piece. The position thus obtained will always be correct geometrically, in that the said arm's axis, and the axis of the self-centring platform (5) always share the same plane, notwithstanding the position which may be assumed by the latter as a result of the chassis' (4) movement along the guides (3). The machine's command controls are grouped together in a frame (11) suspended at the extremity of an arm (12) which is incorporated into the uppermost part of the vertical structure (2).

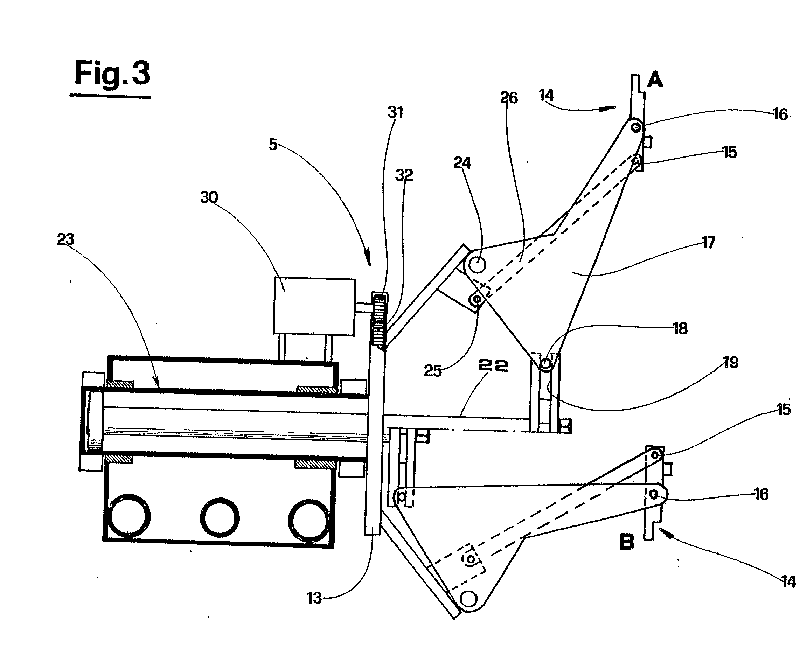

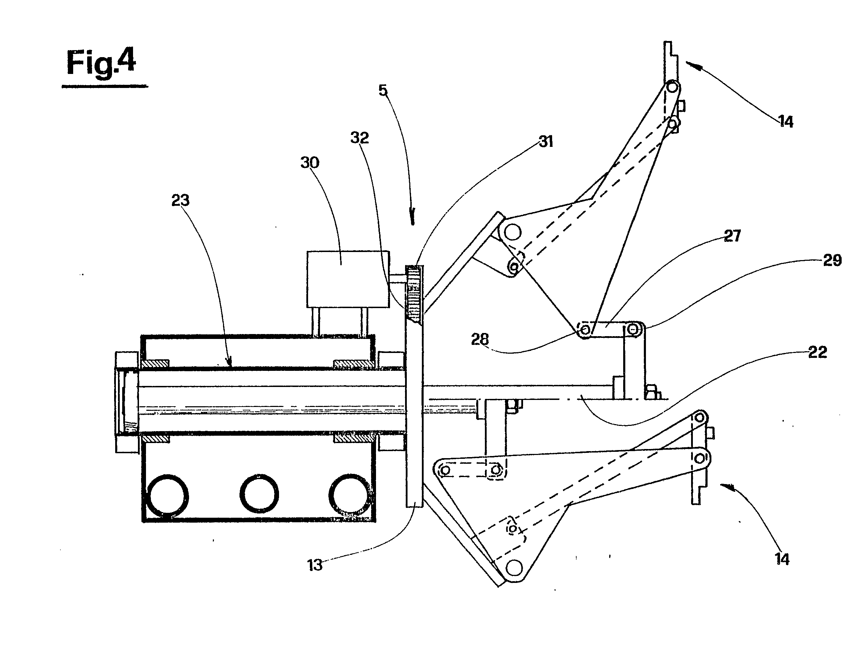

In a form of embodiment of the invention shown in Fig. 3 the self-centring platform (5) consists of a body (13) onto which are hinged four angularly equidistant jaws (14). Each jaw is engaged mechanically as though it were a rod having the function of connecting rod for an articulated parallelogram in which the opposing rod serves as bridge or base. The axes of each of the jaws' (14) articulating pivots (15 and 16) are parallel and are contained within a plane that is continuously vertical regardless of the position assumed by the jaw. One of the rods having the function of crank for each jaw (14) is composed of two angular levers (17) disposed parallel and symmetrically with respect to that plane containing the axis of the self-centring platform (5). Each of the jaws' (14) pair of angular levers (17) is coupled together, and furnished with a pivot (18) which is engaged by a groove (19) located in one arm of a quasi-cruciform body which is in turn fixed to the extremity of the shaft (22) of a dynamic fluid driver cylinder (23). The dynamic fluid cylinder (23) is disposed coaxially to the self-centring platform (5) to which it is integrated. The two angular levers (17) composing one of the rods which has the function of connecting rod for the said articulated parallelogram are hinged to the body (13) of the self-centring platform (5) by means of a pivot (24); the other rod, which has the function of crank for the said articulated parallelogram and indicated by the number (26), has a rectilinear axis and is hinged to the body (13) of the self-centring platform (5) by means of a pivot (25); the rod (26) and the angular levers (17) are connected to the individual jaw (14) by means of their respective pivots (15 and 16). The axes of pivots (24) and (25) are likewise parallel and lie in a vertical plane parallel to that containing the axes of pivots (15) and (16). The passage from the posture of the jaw from position A to that of B, these being the largest gripping diameter of the fully extended jaw and the smallest gripping diameter of the fully retracted jaw respectively, is obtained simply, being the product of that axial traverse executed by the shaft (22) of the dynamic fluid driver cylinder (23). This said traverse in fact causes the angular levers (17) to rotate around the corresponding pivot (24) and hence the opening or closing of the self-centring mechanism. The self-centring platform's (5) gripping diameter scope, that is from the jaw's minimum diameter gripping capability when in posture B to its maximum said capability when in posture A, is considerably wide, departing from a minimum of 14″ to a maximum of 42″. This makes it possible to work on wheels of varying diameter without the need for adapting the self-centring device when changing from a small diameter wheel to a much larger, or vice-versa. In a second form of embodiment in Fig. 4 the pivot (18) and groove (19) arrangement is replaced by a connecting rod (27) hinged to a pivot (28) located on the angular levers (17) in like manner to the pivot (18) in the first form of embodiment, and to a pivot (29) fixed to the extremity of the shaft (22) of the dynamic fluid driver cylinder (23). The dynamic fluid driver cylinder (23) is double-acting so as to command the opening and the closing of the self-centring platform's (5) jaws.

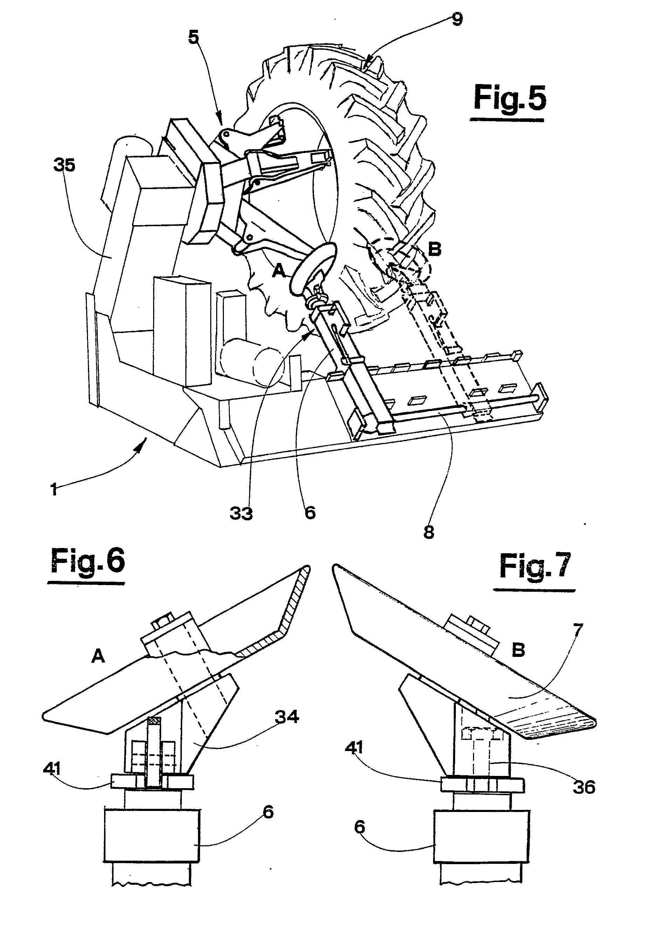

In the event of an embodiment's incorporating a single acting dynamic fluid driver cylinder, provision would need to be made for return springs operating between the angular levers (17) and the rods (26) of each jaw. The self-centring platform's (5) rotary movement is transmitted by means of a motor (30) which propels a pinion (31) and by a crown wheel (32) located on the outer perimeter of the body (13) of the self-centring platform (5); the said crown wheel and pinion forming a gear pair. The driver cylinder (23) may be substituted by some similar device, for instance a screw mechanism which would produce axial traverse of the shaft (22). The form of embodiment illustrated in Fig. 5 shows a self-centring platform (5) which revolves around a horizontal axis, borne on the extremity of a robust arm (35) which is pivoted to the chassis (1) around a horizontal axis parallel with that of the said self-centring platform.

The ability of the arm (35) to rotate around the pivot to which it is hinged allows the positioning of the self-centring platform's (5) axis at a variable height in order to centre it correspondingly with the individual wheel before it.

The removal or fitting of a tyre from/to the wheel (9) is achieved by means of a single appliance (33) which can be utilised by operating either on that side of the wheel (9) opposed to the self-centring platform (5) or on the side opposite. The appliance (33) comprises a tool-bearing arm (6) which is hinged at its lower end around a pivot (8) having its axis disposed parallel with that of the said self-centring platform's (5) axis of rotation.

The tool-bearing arm (6) is coupled to the pivot (8) so as to slide axially thereon, both right and left. The tool-bearing arm (6) is telescopic, and provision is made at its upper extremity for a disc-like, or wheel-type tool (7) for removal and/or fitting the tyre. The tool (7) is mounted onto a support (34) which in turn is planted onto a pivot (36) located at the extremity of the tool-bearing arm (6).

The pivot (36) is disposed coaxially with respect to the axis of the tool-bearing arm (6).

The support (34) can be rotated around the pivot (36) and may be locked with respect to the latter, and thus to the tool-bearing arm (6), in two operating positions, these last being disposed symmetrically with respect to the vertical plane containing the tool-bearing arm's (6) axis.

The actual transfer from that operating position defined by letter A, wherein the tool (7) operates on that side of the wheel (9) opposed to the self-centring platform (5), to position B, wherein the tool (7) operates on the opposite side of the wheel (9) is achieved simply by rotating the support (34) around the pivot (36) so as to take the former through half a complete revolution. Locking of the support (34) to the tool-bearing arm (6) into either one of the two said positions is achieved by means of a locking device comprising a locking lever member (37) integrated into the rotating support (34) which couples by engaging either one of two slots (38) incorporated into the extremity of the tool-bearing arm (6), whose positions are diametrically opposed with respect to the axis around which the support (34) is pivoted.

The locking member (37) is prismatic in shape and is pivoted to the support (34) by means of a pin (39) in such a way that the extremity (40) of the locking member (37) which couples by engaging either one of the two slots (38) is shaped and disposed with its actual generating lines parallel with that axis around which the support (34) is pivoted.

In addition, the generating lines of the opposed parallel and lateral surfaces of the slots (38) are thus parallel with the axis of the said pivot (36).

the slots (38) in fact take the form of notches, cut radially into a circular plate (41) which is fixed to the upper extremity of the tool-bearing arm (6). By pressing of the extremity of the member (37) opposite to that extremity numbered (40) towards the support (34) one achieves disengagement of the said extremity (40) from the slot (38) in which it is seated. In fact the movement described by the said locking member's (37) rotation around the pivot (39) is parallel with the said opposed parallel and lateral surface. A spring (43) operating between the support (34) and the locking member (37) performs the function of keeping that appropriate extremity (40) of the locking member (37) engaged within the individual slot (38) that it happens to be inserted. With the tool (7) in position B one may, for example, proceed to break the bead heel of a tubeless tyre on the side opposite (with reference to (9) in Fig. 5) to that opposing the self-centring platform (5). In order to carry out bead-breaking and removal of the tyre by operating on that side of the tyre opposing the said platform (5) it is sufficient to move the tool-bearing arm (6) along the pivot (8), position it accordingly, and then to rotate the support (34) through one half of a complete revolution. For this last step to be accomplished the locking member (37) must be worked by pressing on the appropriate extremity (42) towards the support (34) thus disengaging the said extremity (40) from within the slot (38) which it is seated, and then to rotate the support (37), to which the tool (7) is locked, through 180°. Once that exact position which provokes the action of the spring (43) is arrived at, the appropriate extremity (40) will automatically be engaged by the other slot (38). Once thus engaged there is no possibility of the support's (34) — hence the tool's (7) — rotating around the pivot (36).

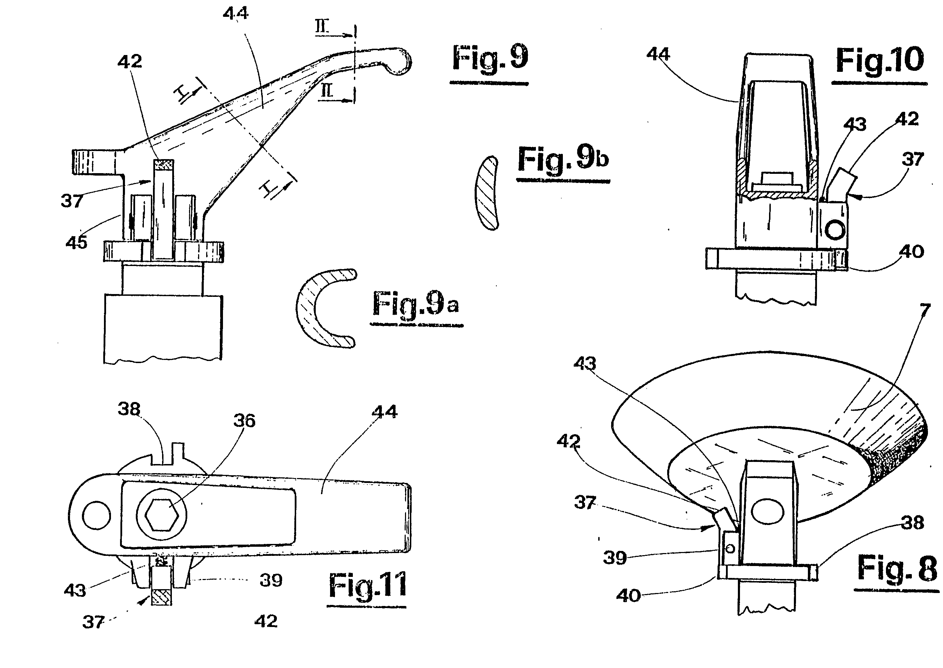

Figs. 9, 10 and 11 show a second tool (44) for removing and fitting tyres, being appropriately profiled and forming a single body with the support (45) which, by virtue of its being similar to the support (34) aforementioned is planted on that pivot (36) at the extremity of the tool-bearing arm (6) and has likewise integrated a locking member (37) pivoted around a pin (39), which couples by engaging with either of the two slots (38).

## Claims

1. Machine for the removal and fitting of pneumatic tyres comprising:
a permanent chassis (1); a movable chassis (4) bearing a self-centring platform (5) revolving around a horizontal axis and designed to receive and lock the rim (10) of a pneumatically-shod wheel (9), centring it with respect to said horizontal axis; a tool-bearing arm (6) hinged at its lower end and having the ability to slide back and forth along a fixed axis parallel with the axis of said self-centring platform's rotary movement; characterised in that the self-centring platform (5) bears — hinged thereto — three or four identical jaws (14); each jaw (14) having the function of a connecting rod in an articulated parallelogram in which the opposing rod has the function of a bridge, or base, on the platform; the axes of said jaws' articulating pivots (15, 16) being parallel and contained in a vertical plane; at least one of the two rods (17, 26) supporting each jaw having the function of a crank and being composed of two coupled, angular levers (17) which are parallel, symmetrically disposed and furnished with a further pivot (18) whose axis is parallel with said articulating pivots (15, 16), the further pivot (18) serving to connect the angular levers with an element commanding the parallelogram movement; said element commanding the parallelogram movement of said angular levers (17) being constituted by a fluid driver cylinder (23) disposed coaxially with said platform (5) and having the extremity of its shaft (22) connected to the further pivot (18) of each of the jaws' (14) of angular levers (17).

2. Machine as in claim 1 characterised in that each further pivot (18) is engaged in a groove (19) perpendicular with respect to the axis of the self-centring platform (5); each of said grooves (19) being located in a quasi-cruciform arm (20) fixed to the extremity of said fluid driver cylinder shaft (22).

3. Machine as in claims 1 and 2 characterised in that it makes provision for a connecting rod (27) for each jaw (14), hinged at one of its extremities to the further pivot (28), and at the other extremity to a third pivot (29) located on a support integrated with the extremity of said shaft (22).

4. Machine as in preceding claims characterised in that it comprises a jack designed to effect the traverse of said tool-bearing arm along a direction parallel with the axis to which it is hinged.

5. Machine as in preceding claims characterised in that it comprises a tool (7) mounted onto a support (34) which is pivoted on the extremity of the tool-bearing arm (6) and as a result rotates with respect to the arm's axis, capable of being locked thereto in at least two positions, these being disposed symmetrically with respect to that vertical plane containing said axis.

6. Machine as in claim 5 characterised in that it makes provision for a device which locks said tool's said support onto said arm, and comprises a locking lever member (37) integrated with the rotating support (34), which member (37) couples by engaging either one of two slots (38) incorporated into the extremity of said arm (6), these slots being in positions diametrically opposed with respect to that axis upon which the support (34) is pivoted.

7. Machine as in claim 6 characterised in that the locking member (37) is prismatic in shape and is pivoted to said support so that the extremity of said member (37) which is coupled by engaging either of the slots (38) is shaped and disposed with its external surfaces' generating lines parallel with the axis around which the support (34) is pivoted; provision also being made for the generating lines of the opposed lateral surfaces of said slots (38) to be parallel with said axis; said slots taking the form of radially-cut notches located at the extremity of the tool-bearing arm (6).

8. Machine as in claim 7, characterised in that the extremity of the locking member (37) can be engaged with, or disengaged from the slots (38) according to an orientation effected within a plane parallel with that of the opposed lateral surfaces of said slots; provision being made for a spring (43) to operate between the support (34) and the locking member (37) having the function of keeping that appropriate extremity of the locking member itself engaged within the individual slot (38) where it happens to be inserted.

9. Machine as in claim 1, characterised in that the movable chassis (4) runs along rectilinear guides (3) inclined with respect to the vertical.

**Revendications**

1. Appareil pour le montage et démontage de pneumatiques comportant:

un châssis fixe (1); un châssis mobile (4) portant une plate-forme à centrage automatique (5) qui tourne autour d'un axe horizontal et destinée à recevoir et à bloquer la jante (10) d'une roue (9) et à la centrer par rapport audit axe horizontal; un bras porte-outil (6) articulé à son extrémité inférieure et en mesure de coulisser en va-et-vient le long d'un axe fixe parallèle à l'axe de rotation de ladite plate-forme à centrage automatique; caractérisé en ce que ladite plate-forme à centrage automatique (5) porte, articulées sur elle-même, trois ou quatre mâchoires identiques (14); chaque mâchoire (14) faisant fonction de tige ou bielle d'accouplement dans un parallélogramme articulé dans lequel la tige en regard fait fonction de pont ou base, sur la plate-forme; les axes des pivots d'articulations (15, 16) desdites mâchoires étant parallèles et contenus dans un plan vertical; l'une au moins des deux tiges (17, 26) supportant chaque mâchoire faisant fonction de manivelle et se composant de deux leviers couplés à angle qui sont parallèles, disposés symétriquement et pourvus d'un pivot supplémentaire (18) dont l'axe est parallèle auxdits pivots d'articulation (15, 16), le pivot supplémentaire (18) servant à relier les leviers à angle à un élément commandant le mouvement du parallélogramme; ledit élément commandant le mouvement du parallélogramme desdits leviers à angle (17) comportant un cylindre de travail oléohydraulique (23) disposé coaxialement avec ladite plate-forme (5) et ayant l'extrémité de son arbre (22) reliée au pivot supplémentaire (18) de chaque paire de leviers à angle (17) des mâchoires (14).

2. Appareil selon la revendication 1, caractérisé en ce que chaque pivot supplémentaire (18) s'engage dans une rainure (19) perpendiculaire à l'axe de la plate-forme à centrage automatique (5); chacune de ces rainures (19) étant ménagée dans un bras (20) sensiblement en forme de croix fixé à l'extrémité de l'arbre (22) dudit cylindre de travail oléohydraulique.

3. Appareil selon les revendications 1 et 2, caractérisé en ce qu'on prévoit une tige ou bielle d'accouplement (27) pour chaque mâchoire (14) articulée à l'une de ses extrémités sur le pivot supplémentaire (28) et à son autre extrémité sur un troisième pivot (29) disposé sur un support solidaire de l'extrémité dudit arbre (22).

4. Appareil selon les revendications 1 à 3, caractérisé en ce qu'il comporte un vérin destiné à causer la translation dudit bras porte-outil le long d'une direction parallèle à l'axe sur lequel il est articulé.

5. Appareil selon les revendications 1 à 4, caractérisé en ce qu'il comporte un outil (7) monté sur un support (34) qui est pivoté sur l'extrémité du bras porte-outil (6) et qui donc tourne par rapport à l'axe du même bras, lequel est en mesure d'être bloqué à celui-ci dans au moins deux positions disposées symétriquement par rapport au plan vertical contenant ledit axe.

6. Appareil selon la revendication 5, caractérisé en ce qu'on prévoit un dispositif susceptible de bloquer ledit support de l'outil sur ledit bras, celui-ci comportant un élément de blocage à levier (37) solidaire du support (34) lors de sa rotation, l'élément de blocage (37) s'engageant dans chacun des deux logements (38) solidaires de l'extrémité du bras (6) qui se trouvent en positions diamétralement opposées par rapport à l'axe sur lequel est pivoté le support (34).

7. Appareil selon la revendication 6, caractérisé en ce que l'élément de blocage (37) est de forme prismatique et il est monté sur le support (34) de telle sorte que l'extrémité de l'élément de blocage (37) susceptible de s'engager avec l'un quelconque des deux logements (38) est conformée et disposée avec les génératrices de ses surfaces extérieures parallèles à l'axe autour duquel est pivoté le support (34); étant également prévu que les génératrices des surfaces latérales opposées desdits logements (38) soient parallèles audit axe; ces logements ayant la forme d'encoches radiales ménagées à l'extrémité du bras porte-outil (6).

8. Appareil selon la revendication 7, caractérisé en ce que l'extrémité de l'élément de blocage (37) peut s'engager avec, ou être dégagée des logements (38) selon une direction appartenant à un plan parallèle à celui des surfaces latérales opposées desdits logements; un ressort (43) susceptible d'agir entre le support (34) et l'élément de blocage (37) étant prévu, lequel a pour but de maintenir l'extrémité appropriée du même élément de blocage en engagement dans le logement individuel (38) dans lequel elle se trouve insérée.

9. Appareil selon la revendication 1, caractérisé en ce que le châssis mobile (4) coulisse le long de glissières rectilignes (3) inclinées par rapport à la verticale.

**Patentansprüche**

1. Maschine zum Demontieren und Montieren von Fahrzeugreifen, enthaltend:

Einen festen Rahmen (1); einen beweglichen Rahmen (4), der eine seblstzentrierende Plattform (5) trägt, welche sich um eine horizontale Achse dreht und dazu bestimmt ist, die Felge (10) eines Fahrzeugreifens (9) aufzunehmen und zu blockieren und diese im Verhältnis zu der horizontalen Achse zu zentrieren; eine Werkzeughalterarm (6), der an seinem unteren Ende angelenkt und in der Lage ist, entlang einer festen Achse parallel zu der Achse der Drehbewegung der genannten selbstzentrierenden Plattform hin- und herzugleiten, dadurch gekennzeichnet, dass die selbstzentrierende Plattform (5) drei oder vier an sie selbst angelenkte Klemmbacken (14) trägt, wobei jede Klemmbacke (14) die Funktion einer Kurbelstange Parallelkrubel-Gelenkviereck hat, in dem die gegenüberliegende Kurbelstange eine Brücke oder einen Rahmen an der Plattform bildet; wobei die Gelenkbolzen (15, 16) der genannten Klemmbacken parallel zueinander liegen und in einer vertikalen Ebene enthalten sind; wobei wenigstens eine der beiden eine Klemmbacke tragenden Stangen (17, 26) die Funktion einer Kurbel hat und aus zwei miteinander gekoppelten Winkelhebeln (17) besteht, die parallel und symmetrisch angeordnet und mit einem weiteren Gelenkbolzen (18) versehen sind, dessen Achse parallel zu den genannten Gelenkbolzen (15, 16) verläuft; wobei der Gelenkbolzen (18) dazu dient, die Winkelhebel mit einem Element zu verbinden, welches die Bewegung des Parallelkurbel-Gelenkvierecks steuert; und wobei das genannte, die Bewegung des Parallelkurbel-Gelenkvierecks der genannten Winkelhebel (17) steuernde Element aus einem öldynamisch arbeitenden Zylinder (23) besteht, der koaxial zu der genannten Plattform (5) angeordnet ist und das Ende seines Schaftes (22) mit dem Bolzen (18) eines jeden Winkelhebelpaares (17) der Klemmbacken (14) verbunden hat.

2. Maschine nach Patentanspruch 1, dadurch gekennzeichnet, dass jeder Gelenkbolzen (18) in eine Nute (19) greift, die rechtwinklig im Verhältnis zu der Achse der selbstzentrierenden Plattform (5) verläuft, wobei jede der genannten Nuten (19) in einen etwa kreuzförmigen Arm (20) eingearbeitet ist, der an dem Ende des Schaftes (22) des genannten öldynamisch arbeitenden Zylinders befestigt ist.

3. Maschine nach den Patentansprüchen 1 und 2, dadurch gekennzeichnet, dass eine Kurbelstange (27) für jede Klemmbacke (14) vorgesehen ist, angelenkt mit dem einen Ende an den Gelenkbolzen (28) und mit dem anderen Ende an einen dritten Gelenkbolzen (29), der sich an einem an dem Ende des genannten Schaftes (22) angebrachten Support befindet.

4. Maschine nach den vorstehenden Patentansprüchen, dadurch gekennzeichnet, dass sie eine Winde enthält, die dazu dient, die Verschiebung des genannten Werkzeughalterarms entlang einer Richtung parallel zu der Achse zu bewirken, an die er angelenkt ist.

5. Maschine nach den vorstehenden Patentansprüchen, dadurch gekennzeichnet, dass sie ein Werkzeug (7) enthält, das an einem Support (34) montiert ist, der an das Ende des Werkzeughalterarms (6) angelenkt und im Verhältnis zu der Achse des Armes selbst drehbar ist und zu diesem in wenigstens zwei Positionen blockierbar ist, die symmetrisch im Verhältnis zu der die genannte Achse enthaltenden vertikalen Ebene angeordnet sind.

6. Maschine nach Patentanspruch 5, dadurch gekennzeichnet, dass eine Vorrichtung vorgesehen ist, welche den genannten Support des genannten Werkzeugs an dem genannten Arm blockiert, enthaltend ein hebelartiges Blockierelement (37), das mit dem rotierenden Support (34) verbunden ist, wobei das Element (37) durch Einrasten mit einer jeden der beiden Nuten (38) gekoppelt wird, die sich an dem Ende des genannten Arms (6) befinden, und wobei die Nuten im Verhältnis zu der Achse, an die der Support (34) angelenkt ist, diametral entgegengesetzt angeordnet sind.

7. Maschine nach Patentanspruch 6, dadurch gekennzeichnet, dass das Blockierelement (37) prismenförmig ausgebildet und so an den genannten Support angelenkt ist, dass das Ende des genannten Elementes (37), das durch Einrasten mit einer jeden der Nuten (38) gekoppelt ist, so geformt und mit seiner äusseren Oberfläche angeordnet ist, dass es eine Linie parallel zu der Achse bildet, an die der Support (34) angelenkt ist; wobei ebenfalls vorgesehen ist, dass auch die Erzeugenden der sich gegenüberliegenden seitlichen Flächen der genannten Nuten (38) parallel zu der genannten Achse verlaufen, und wobei die genannten Nuten an dem Ende des Werkzeughalterarms (6) als radiale Einschnitte ausgebildet sind.

8. Maschine nach Patentanspruch 7, dadurch gekennzeichnet, dass das Ende des Blockierelementes (37) mit den genannten Nuten (38) gekoppelt oder von diesen entkoppelt werden kann, und zwar in Übereinstimmung mit einer Richtung innerhalb einer Ebene, die parallel zu den genannten, sich gegenüberliegenden seitlichen Flächen der genannten Nuten verläuft, wobei eine Feder (43) vorgesehen ist, die zwischen dem Support (34) und dem Blockierelement (37) wirkt und die Aufgabe hat, das Ende des Blockierelementes selbst in der einzelnen Nute (38) zu halten, in die es eingerastet ist.

9. Maschine nach Patentanspruch 1, dadurch gekennzeichnet, dass der bewegliche Rahmen (4) sich entlang gerade verlaufender Schienen 3 bewegt, die im Verhältnis zu der Vertikalen geneigt sind.

# Fig.1

# Fig. 2

# Fig.3

Fig.4

**Fig.5**

**Fig.6**

**Fig.7**

Fig.10

Fig.8

Fig.9

Fig.9b

Fig.9a

Fig.11